# EUROPÄISCHE PATENTANMELDUNG

(11) **EP 2 886 952 A1**
(43) Veröffentlichungstag der Anmeldung: **24.06.2015**
(21) Anmeldenummer: 14000782.4
(22) Anmeldetag: 05.03.2014
(51) Int. Cl.: F22B 37/78, F22B 35/00, F01K 13/02, G01F 23/00, G05D 9/12, G01F 15/10

(54) **Zuverlässiger Regler und Wächter / Begrenzer "Besonderer Bauart" für den Wasserstand in Kombination mit automatisch überwachtem Einfrierschutz für wasserbauliche Anlagen**

(30) Priorität: 18.03.2013 DE 102013004518
(71) Anmelder: Wuerzinger, Walter, 83512 Wasserburg am Inn (DE)
(72) Erfinder: Wuerzinger, Walter, 83512 Wasserburg am Inn (DE)

(57) **Zusammenfassung**

In der Altstadt von Wasserburg am Inn wäre am 24.8.2005 durch eine technische Fehlfunktion an der Niveauregulierung des Wasserkraftwerks um Haaresbreite eine katastrophale Überschwemmung mit einem wirtschaftlichen Schadenspotential von bis zu 500 Millionen Euro verursacht worden.

Seit Jahrzehnten sind zuverlässige Regler und Wächter/Begrenzer (DIN 3440) "Besonderer Bauart" für den Wasserstand als sicherheitsgerichtete Bauteile in brisanten Thermischen Kraftwerksanlagen respektive Dampf- und Heißwasserkesselanlagen ohne ständige Beaufsichtigung erfolgreich im Einsatz. TRD 604-2 Ziffer 3.6.1: "... "Besondere Bauart" *liegt vor, wenn im elektrischen und mechanischen Teil bei jedem Gerät eine regelmäßig ablaufende Prüfung (z.B. bei Elektrodenwasserstandgeräten die Überwachung des Isolationswiderstandes ...) selbsttätig erfolgt. Der zeitliche Abstand dieser Prüfungen darf höchstens 6 Stunden betragen ...* "

Derartige in Kesselanlagen als Stand der Technik bewährten Bauteile werden nun auch in wasserbaulichen Anlagen ohne ständige Beaufsichtigung eingesetzt. Diese Bauteile werden hierzu zusätzlich mit mechanischen Schutzeinrichtungen versehen und mit einem Einfrierschutz. Auch dessen Funktion wird automatisiert überwacht durch eine periodische Fehlersimulierung und deren sicherheitsgerichteter IogischerAuswertung.

## Beschreibung

Die letzten Jahre wurde die Stromerzeugung in Deutschland liberalisiert. Damit einhergehend wurden Sicherheitsstandards reduziert und Arbeitsabläufe durch die Betreiber rationalisiert. Früher waren derartige Anlagen andauernd personell besetzt und beaufsichtigt. Heute findet Fernüberwachung statt mit einhergehender unzuverlässiger technischer Funktion und oftmals unzuverlässigem beziehungsweise unkundigem Personal. Mit dieser unverantwortlichen Rationalisierung konnte bisher weder der S.d.T. noch die Gesetzgebung mithalten.

In der Altstadt von Wasserburg am Inn wäre so am 24.8.2005 durch eine technische Fehlfunktion an der Niveauregulierung des Wasserkraftwerks - S.d.T. laut Baujahr 1938 - um Haaresbreite eine katastrophale Überschwemmung mit einem wirtschaftlichen Schadenspotential von bis zu 500 Millionen Euro verursacht worden.

Laut S.d.T. sind seit Jahrzehnten zuverlässige Regler und Wächter beziehungsweise Begrenzer (DIN 3440) "Besonderer Bauart" für den Wasserstand als sicherheitsgerichtete Bauteile in brisanten **Thermischen Kraftwerksanlagen** respektive Dampfund Heisswasserkesselanlagen ohne ständige Beaufsichtigung erfolgreich im Einsatz. TRD 604-2 Ziffer 3.6.1: *"... "Besondere Bauart" liegt vor, wenn im elektrischen und mechanischen Teil bei jedem Gerät eine regelmäßig ablaufende Prüfung (z.B. bei Elektrodenwasserstandgeräten die Übenwachung des Isolationswiderstandes, bei Tauchkörpergeräten die automatische Funktionsprüfung, bei außenliegenden Geräten das getrennte Durchblasen der Verbindungsleitungen) selbsttätig erfolgt. Der zeitliche Abstand dieser Prüfungen darf höchstens 6 Stunden betragen. Eine gleichzeitige Überbrückung von zwei Begrenzern darf nicht länger als etwa 1*/*2 Minute, die Überbrückung eines Begrenzers nicht länger als etwa 5 Minuten dauern...*". Diese Geräte schützen hier den Kesselstahl vor Überhitzung und katastrophalem Festigkeitsverlust in Folge von Kühlmittelverlust respektive Wassermangel (s.a. www.gestra.de, www.spirax-sarco.com, www.de.edress.com).

Laut S.d.T. werden bei den gegenständlichen **wasserbaulichen Anlagen** für die Niveauregulierung Schwimmer oder pneumatische Meßwertaufnehmer eingesetzt. Diese besitzen bewegliche Bauteile und dadurch mannigfache Fehlermöglichkeiten beispielsweise durch mechanische Beeinträchtigung oder auch Einfrieren.

### zu § 10 (2) 4.-6. PatV: Erfindung, Anwendbarkeit, Vorteile:

O.g. in Kesselanlagen bewährten sicherheitsgerichteten Bauteile werden nun auch in zuverlässigen wasserbaulichen Anlagen eingesetzt. Diese werden zusätzlich mit massiven mechanischen Schutzeinrichtungen sowie überwachtem Einfrierschutz mit automatischer logischer Plausibilitätskontrolle versehen.

Sie regeln, überwachen beziehungsweise begrenzen konduktiv, kapazitiv beziehungsweise induktiv den Wasserstand im Ober- beziehungsweise Unterwasser von wasserbaulichen Anlagen.

Die Besonderheit liegt in der Tatsache begründet, dass diese Einrichtungen wie vorbeschrieben nachweislich zuverlässig funktionieren beziehungsweise in *"Besonderer Bauart"* selbstüberwachend und fehlersicher gegebenenfalls auch gutachterlich "TÜV-geprüft" sind. Damit können Anlagen für einen verantwortungsvollen Betrieb in Fernüberwachung ohne ständige personelle Beaufsichtigung ausgerüstet werden ohne die Gefahr o.g. etwaiger Überschwemmungen.

### zu § 10 (2) 7. PatV: Ausführungsbeispiel:

O.g. Elektrodenwasserstandgeräte laut S.d.T. werden nun u.U. redundant in massiven, schützenden, senkrechten Messflaschen mit kommunizierenden Röhren / Öffnungen zum Wasserstand angeordnet. Nun erfolgt die KOMBINATION mit einem Einfrierschutz in Form einer zusätzlichen thermostatisch geregelten Beheizung z.B. mittels elektrischer Widerstandsheizung.

Die automatische logische Plausibilitätskontrolle wird sichergestellt durch einen Temperaturmessaufnehmer in kurzschluss- sowie kabelbruchsicherer Ausführung in der Messflasche. Periodisch wird o.g. Thermostat abwechselnd überbrückt und unterbrochen wie vor. O.g. Temperaturmessaufnehmer wird automatisch logisch auf Temperaturanstieg beziehungsweise -abfall ausgewertet.

Nach Bestehen der automatischen logischen Plausibilitätskontrolle wird der Anlagenbetrieb unbedenklich weitergeführt.

Im logischen Fehlerfall wird eine geeignete Störmeldung abgesetzt und u.U. zusätzliche örtlich erforderliche Maßnahmen ergriffen.

## Patentansprüche

**1.** Zuverlässige Regler und Wächter/Begrenzer "Besonderer Bauart" im Bereich der überwachungsbedürftigen Anlagen nach ProdSG/BetrSichV beziehungsweise in Dampfund Heißwasserkesselanlagen ohne ständige Beaufsichtigung sind seit Jahrzehnten als Stand der Technik bewährt.

**2.** Auch der Tatbestand derartige Bauteile in wasserbaulichen Anlagen mit einer Beheizung zu versehen ist Stand der Technik.

**3.** Die erfinderischen Neuerungen für die vorgenannte Kombination hinsichtlich wasserbaulicher Anlagen zeichnen sich aus durch:
1.) Absenz von fehlerträchtigen mechanisch bewegten Bauteilen,
2.) zusätzliche Schutzeinrichtungen gegen mechanische Einwirkungen sowie
3.) Einfrierschutz mit automatisierter Funktionsüberwachung durch periodische Fehlersimulierung und deren sicherheitsgerichteter logischer Auswertung.
